# EUROPÄISCHE PATENTSCHRIFT

(11) **EP 4 341 194 B1**
(45) Veröffentlichungstag und Bekanntmachung des Hinweises auf die Patenterteilung: **02.07.2025**
(21) Anmeldenummer: 22724640.2
(22) Anmeldetag: 21.04.2022
(51) Int. Cl.: B66C 3/02, B66C 3/12, B66D 1/26, B66D 1/28, F16H 57/025, B66C 3/18

(54) **ANTRIEBSANORDNUNG MIT EINER WELLE, EINER SEILTROMMEL, EINEM HALTEMITTEL UND EINEM GETRIEBEMOTOR**
DRIVE ASSEMBLY COMPRISING A SHAFT, A CABLE DRUM, A HOLDING MEANS, AND A GEAR MOTOR
ENSEMBLE D'ENTRAÎNEMENT COMPRENANT UN ARBRE, UN TAMBOUR DE CÂBLE, UN MOYEN DE RETENUE ET UN MOTEUR À ENGRENAGES

(30) Priorität: 17.05.2021 CN 202110533958; 07.07.2021 DE 102021003504
(43) Veröffentlichungstag der Anmeldung: 27.03.2024
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2022/025162
(87) Internationale Veröffentlichungsnummer: WO 2022/242897

(56) Entgegenhaltungen:
- DE-A1- 102014 205 250
- DE-A1- 19 903 227
- DE-C2- 19 903 227
- US-B2- 9 527 702

## Beschreibung

Die Erfindung betrifft eine Antriebsanordnung mit einer Welle, einer Seiltrommel, einem Haltemittel und einem Getriebemotor.

Es ist allgemein bekannt, dass eine Antriebsanordnung mit einer Welle, einer Seiltrommel, einem Haltemittel und einem Getriebemotor ausgeführt ist.

Aus der DE 199 03 227 C2 ist als nächstliegender Stand der Technik ein Seilzug mit Überlastsicherung bekannt. Dieses Dokument offenbart den Oberbegriff des Anspruchs 1.

Aus der US 2016 / 0 031 686 A1 ist ein Direktantrieb mit lagerlosem Motor bekannt.

Aus der DE 10 2014 205250 A1 ist ein stationäres Hubwerk mit Dämpfer bekannt.

Aus der US 9 527 702 B2 ist ein Seiltrieb bekannt.

Der Erfindung liegt daher die Aufgabe zugrunde, eine Antriebsanordnung mit einer Welle, einer Seiltrommel, einem Haltemittel und einem Getriebemotor kompakt und robust weiterzubilden.

Erfindungsgemäß wird die Aufgabe bei der Antriebsanordnung mit einer Welle, einer Seiltrommel, einem Haltemittel und einem Getriebemotor nach den in Anspruch 1 angegebenen Merkmalen gelöst.

Wichtige Merkmale der Erfindung bei der Antriebsanordnung mit einer Welle, einer Seiltrommel, einem Haltemittel und einem Getriebemotor, sind, dass der Getriebemotor ein von einem Elektromotor des Getriebemotors angetriebenes Getriebe aufweist, dessen Abtriebswelle, insbesondere abtreibende Welle, als Hohlwelle ausgeführt ist,
wobei in einem Gehäuseteil des Getriebes Lager aufgenommen sind zur drehbaren Lagerung der Abtriebswelle,
wobei die Welle mittels im Haltemittel aufgenommener Lager drehbar gelagert ist, insbesondere relativ zum Haltemittel,
wobei die Seiltrommel drehfest verbunden ist mit der Welle,
wobei eine Drehmomentstütze, insbesondere ein Drehmomentstützteil, mit dem Haltemittel verbunden ist, insbesondere mittels Schrauben verbunden ist,
wobei zumindest eine durch eine Ausnehmung der Drehmomentstütze durchgehende Schraube
   - in eine Gewindebohrung des Gehäuseteils des Getriebes oder
   - in eine Gewindebohrung eines am Gehäuseteil des Getriebes anliegenden Teils, insbesondere in Richtung der Drehachse der Welle formschlüssig mit dem Gehäuseteil verbundenen Teils,
   eingeschraubt ist,
wobei die Schraube mit ihrem Schraubenkopf einen ersten Dämpfungsring auf die Drehmomentstütze drückt und somit die Drehmomentstütze einen zweiten Dämpfungsring zu dem Gehäuseteil des Getriebes hindrückt.

Von Vorteil ist dabei, dass Stoßbelastungen, welche über die Stangen an das Haltemittel weitergeleitet werden zum Getriebemotor hin abdämpfbar sind. Somit ist die Antriebsanordnung robust ausgeführt. Außerdem ist die Seiltrommel über die Welle direkt mit der Abtriebswelle des Getriebes verbunden. Ein Adapter oder eine Kupplung ist nicht vorgesehen. Daher ist eine kompakte Lösung erreicht.

Bei einer vorteilhaften Ausgestaltung ist das Getriebe als Parallelwellengetriebe ausgeführt und die Rotorwelle des Elektromotors ist parallel zur Welle ausgerichtet. Von Vorteil ist dabei, dass eine kostengünstige Herstellung ermöglicht ist.

Bei einer vorteilhaften Ausgestaltung ist der lichte Innendurchmesser der Ausnehmung größer als der maximale Außendurchmesser desjenigen Bereichs der Schraube, der in axialer Richtung denselben Beriech überdeckt, welchen auch die Ausnehmung in axialer Richtung überdeckt. Von Vorteil ist dabei, dass die Schraube beabstandet ist von der Drehmomentstütze.

Bei einer vorteilhaften Ausgestaltung sind die Dämpfungsringe aus einem Material gefertigt sind, welches weicher ist als und/oder eine höhere Elastizität und/oder einfachere Verformbarkeit aufweist als das Material, aus welchem die Drehmomentstütze gefertigt ist und/oder aus welchem das Gehäuseteil gefertigt ist. Von Vorteil ist dabei, dass eine hohe Dämpfung erreichbar ist.

Bei einer vorteilhaften Ausgestaltung sind die Dämpfungsringe aus Kunststoff und/oder Gummi gefertigt. Von Vorteil ist dabei, dass eine Dämpfung von Stoßbelastungen erreichbar ist.

Bei einer vorteilhaften Ausgestaltung ist die Drehmomentstütze als L-förmig gebogenes Stahlteil ausgeführt,
wobei ein erster Schenkel des L sich parallel zur Drehachse der Welle erstreckt und der andere Schenkel sich senkrecht zur Drehachse der Welle erstreckt. Von Vorteil ist dabei, dass eine einfache Herstellung eines robusten Bauteils ermöglicht ist.

Bei einer vorteilhaften Ausgestaltung ist jeder Dämpfungsring mehrstückig ausgeführt. Von Vorteil ist dabei, dass eine verbesserte Dämpfung erreichbar ist.

Bei einer vorteilhaften Ausgestaltung ist jeder Dämpfungsring als Stapel von Ringen ausgeführt, die jeweils aus unterschiedlichem Material gefertigt sind. Von Vorteil ist dabei, dass eine verbesserte Dämpfung von Stoßwellen erreichbar ist und somit der Getriebemotor geschützt angeordnet ist.

Bei einer vorteilhaften Ausgestaltung ist die Welle teilweise in die Hohlwelle eingesteckt und drehfest verbunden, insbesondere mittels Passfederverbindung. Von Vorteil ist dabei, dass eine kompakte und trotzdem robuste Ausführung in einfacher Weise ermöglicht ist.

Bei einer vorteilhaften Ausgestaltung sind auf der Seiltrommel Seile aufwickelbar,
wobei ein jeweiliges Seil mit einem jeweiligen Korbteil eines Greifkorbs verbunden ist. Von Vorteil ist dabei, dass eine einfache robuste Antriebslösung für den Greifkorb erreichbar ist. Bei einer vorteilhaften Ausgestaltung sind die Korbteile um eine gemeinsame Drehachse drehbar gelagert angeordnet,
wobei jedes Korbteil über ein jeweiliges Drehlager mit einer Stange verbunden ist, die mit dem Haltemittel verbunden ist, insbesondere spielbehaftet verbunden ist. Von Vorteil ist dabei, dass eine einfache kostengünstige Herstellung ermöglicht ist.

Bei einer vorteilhaften Ausgestaltung ist am Haltemittel eine Dämpfungsrolle befestigt, an welcher der Elektromotor, insbesondere mit seinem Gehäuse, anliegt. Von Vorteil ist dabei, dass eine wirksame Abdämpfung erreichbar ist, da der Motor, insbesondere sein Gehäuse, nur lose anliegt und somit Stoßwellen sich nur schwer zum Motor hin ausbreiten können.

Weitere Vorteile ergeben sich aus den Unteransprüchen.

Die Erfindung wird nun anhand von schematischen Abbildungen näher erläutert:
In der Figur 1 ist ein Greifkorbantrieb, insbesondere Schaufelantrieb, schematisch skizziert.

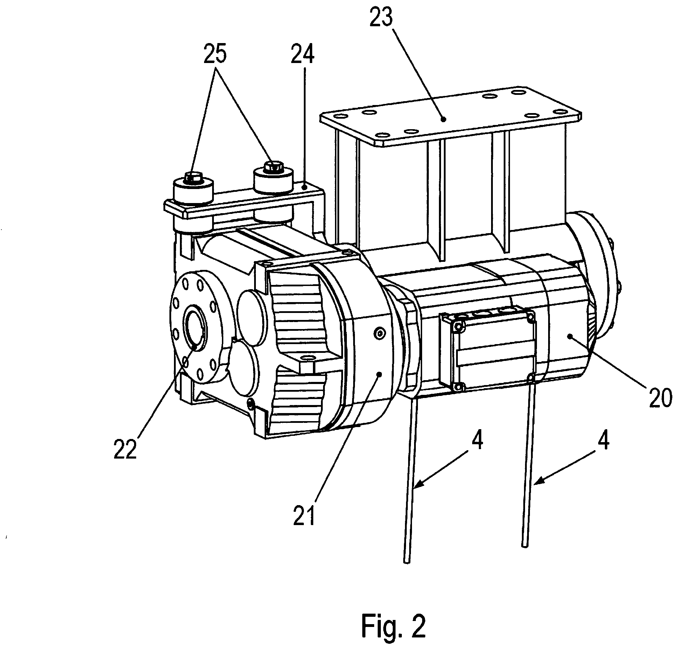

In der Figur 2 ist ein Antriebsbereich des erfindungsgemäßen Antriebs, aufweisend einen Getriebemotor, in Schrägansicht dargestellt.

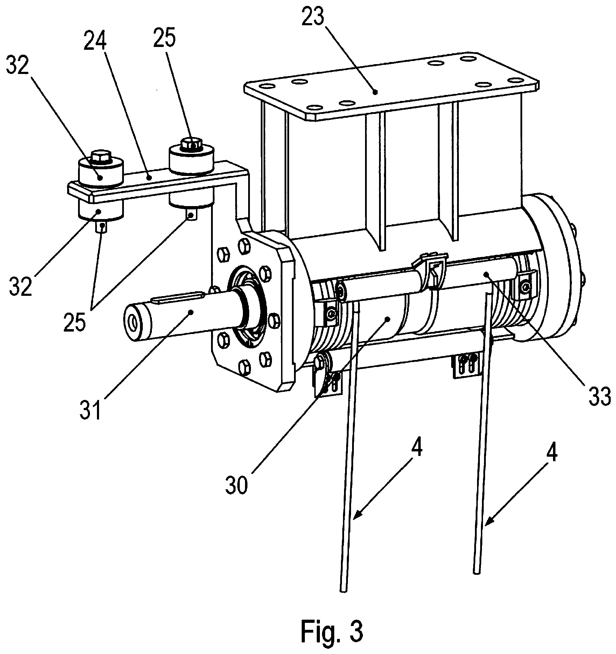

In der Figur 3 der Antriebsbereich ohne Getriebemotor dargestellt.

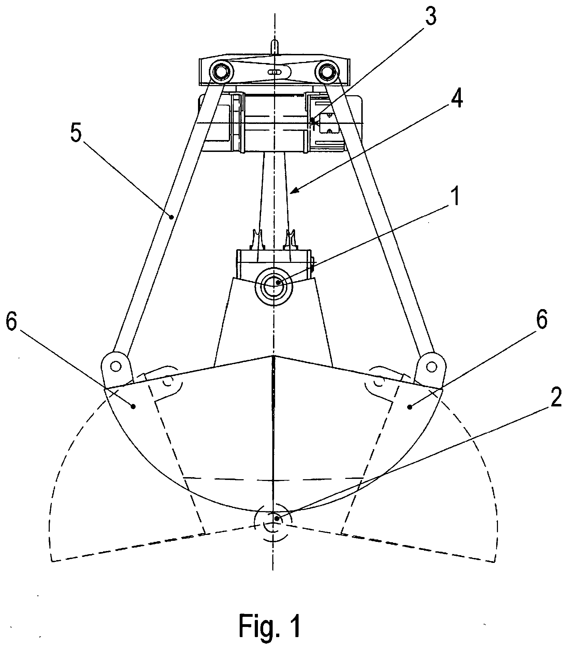

Wie in den Figuren dargestellt, weist der Greifkorb zwei relativ zueinander bewegbare Korbteile, insbesondere Schaufeln, auf.
die beiden Korbteile sind um eine gemeinsame Drehachse drehbar angeordnet. In Figur 1 ist die Drehachse in einer ersten Position 1 und in einer zweiten Position 2 schematisch angedeutet. Abhängig von der Drehstellung der Korbteile um die Drehachse herum wird also die Position der Drehachse verschoben, da jedes Korbteil über ein Drehgelenk mit einer Stange 5 verbunden ist, die mit nur geringem Spiel mit einem Haltemittel 23 eines Seilwindenantriebs 3 verbunden ist.

Am Haltemittel 23 ist eines Welle 31 drehbar gelagert, auf welche eine von einem Getriebemotor (20, 21) des Seilwindenantriebs 3 antreibbare Seiltrommel des Seilwindenantriebs 3 aufgesteckt ist und drehfest verbunden ist. Die Seiltrommel wird von einer als Hohlwelle 22 ausgeführten Abtriebswelle eines Getriebes 21 des Getriebemotors angetrieben. Dabei ist die Hohlwelle 22 auf die axial hervorragende Welle 31 aufgesteckt und drehfest verbunden.

Das Getriebe 21 ist von einem Elektromotor 20 angetrieben.

Auf der Seiltrommel sind zwei Seile 4 aufwickelbar, wobei jedes der Seile 4 mit einem jeweiligen Korbteil 6 verbunden ist, so dass durch Aufwickeln oder Abwickeln der Seile 4 auf der Seiltrommel ein Schwenken des jeweiligen Korbteils ermöglicht.

Mit dem Haltemittel 23 ist eine Drehmomentstütze 24 verbunden, durch welche das Reaktionsmoment des Getriebemotors ableitbar ist. Zur Verbindung der Drehmomentstütze 24 sind Schrauben 25 in Gewindebohrungen des Gehäuseteils des Getriebes oder eines am Gehäuseteil des Getriebes anliegenden Blechteils eingeschraubt.

Die Schrauben 25 ragen durch die Drehmomentstütze 24 hindurch, wobei beidseitig der Drehmomentstütze Dämpfungsringe 32 angebracht sind, durch welche die Schrauben 25 ebenfalls hindurchragen.

Somit liegt der Schraubenkopf der jeweiligen Schraube 25 an einem ersten der Dämpfungsringe 32 an, welcher an der Drehmomentstütze 24 anliegt, welche über einen jeweiligen zweiten Dämpfungsring 32 zum Gehäuseteil des Getriebes hingedrückt ist. Dabei ragen die Schrauben 25 durch eine Ausnehmung der Drehmomentstütze hindurch, wobei die Ausnehmung einen größeren lichten Innendurchmesser aufweist als der Außendurchmesser der Schraube 25 ist. Vorzugsweise ist also ein genügend großes Spiel zwischen der jeweiligen Schraube 25 und der Drehmomentstütze 24 vorhanden, dass bei stoßartigen Belastungen der Korbteile 6 der Getriebemotor nur gering belastet wird.

Zwar werden Stoßbelastungen, welche auf die Seile 4 wirken, über die Seiltrommel und die Welle 31 auf die Hohlwelle 22 übertragen, jedoch werden Stoßbelastungen, welche über die Stangen 5 eingetragen werden nur über das Haltemittel 23 und die Drehmomentstütze 24 und die zwischengeordneten Dämpfungsringe 32 zum Getriebe hinübertragen.

Die Dämpfungsringe 32 sind aus einem weicheren Material als die vorzugsweise aus Stahl gefertigte Drehmomentstütze 24 und das vorzugsweise aus Stahl gefertigte Gehäuseteil des Getriebes. Als Material der Dämpfungsringe 32 eignet sich ein Kunststoff und/oder Gummi.

Der Elektromotor 20, insbesondere das Gehäuse des Elektromotors 20, liegt vorzugsweise an Dämpfungsrollen 33 an, so dass der Getriebemotor vor Stößen geschützt ist.

Die Drehmomentstütze 24 ist als L-förmig gebogenes Stahlteil ausgeführt, wobei ein erster Schenkel des L sich parallel zur Drehachse der Welle erstreckt und der andere Schenkel sich senkrecht zur Drehachse der Welle erstreckt.

Bei weiteren erfindungsgemäßen Ausführungsbeispielen wird jeder Dämpfungsring mehrstückig ausgeführt. Dabei ist also jeder Dämpfungsring durch einen Stapel von Ringen ausführbar, die jeweils aus unterschiedlichem Material gefertigt sind. Somit ist eine weiter verbesserte Dämpfung erreichbar.

### Bezugszeichenliste

1 erste Position
2 zweite Position
3 Seilwindenantrieb
4 Seil
5 Stange
6 Korbteil, insbesondere Schaufel
20 Elektromotor
21 Getriebe
22 Hohlwelle, insbesondere Abtriebswelle
23 Haltemittel
24 Drehmomentstütze
25 Schrauben
30 Seiltrommel
31 Welle
32 Dämpfungsring
33 Dämpfungsrolle

## Patentansprüche

1. Antriebsanordnung mit einer Welle (31), einer Seiltrommel (30), einem Haltemittel (23) und einem Getriebemotor,
wobei der Getriebemotor ein von einem Elektromotor (20) des Getriebemotors angetriebenes Getriebe (21) aufweist, dessen Abtriebswelle, insbesondere abtreibende Welle (31), als Hohlwelle (22) ausgeführt ist,
wobei in einem Gehäuseteil des Getriebes (21) Lager aufgenommen sind zur drehbaren Lagerung der Abtriebswelle,
wobei die Welle (31) mittels im Haltemittel (23) aufgenommener Lager drehbar gelagert ist, insbesondere relativ zum Haltemittel (23),
wobei die Seiltrommel (30) drehfest verbunden ist mit der Welle (31),
wobei eine Drehmomentstütze (24), insbesondere ein Drehmomentstützteil, mit dem Haltemittel (23) verbunden ist, insbesondere mittels Schrauben (25) verbunden ist,
**dadurch gekennzeichnet, dass** zumindest eine durch eine Ausnehmung der Drehmomentstütze (24) durchgehende Schraube
- in eine Gewindebohrung des Gehäuseteils des Getriebes (21) oder
- in eine Gewindebohrung eines am Gehäuseteil des Getriebes (21) anliegenden Teils, insbesondere in Richtung der Drehachse der Welle (31) formschlüssig mit dem Gehäuseteil verbundenen Teils,
eingeschraubt ist,
wobei die Schraube mit ihrem Schraubenkopf einen ersten Dämpfungsring (32) auf die Drehmomentstütze (24) drückt und somit die Drehmomentstütze (24) einen zweiten Dämpfungsring (32) zu dem Gehäuseteil des Getriebes (21) hin drückt.

2. Antriebsanordnung nach Anspruch 1,
**dadurch gekennzeichnet, dass**
das Getriebe (21) als Parallelwellengetriebe ausgeführt ist und die Rotorwelle des Elektromotors (20) parallel zur Welle (31) ausgerichtet ist.

3. Antriebsanordnung nach einem der vorangegangenen Ansprüche,
**dadurch gekennzeichnet, dass**
der lichte Innendurchmesser der Ausnehmung größer ist als der maximale Außendurchmesser desjenigen Bereichs der Schraube, der in axialer Richtung denselben Beriech überdeckt, welchen auch die Ausnehmung in axialer Richtung überdeckt.

4. Antriebsanordnung nach einem der vorangegangenen Ansprüche,
**dadurch gekennzeichnet, dass**
die Dämpfungsringe (32) aus einem Material gefertigt sind, welches eine höhere Elastizität aufweist als das Material, aus welchem die Drehmomentstütze (24) gefertigt ist und/oder aus welchem das Gehäuseteil gefertigt ist.

5. Antriebsanordnung nach einem der vorangegangenen Ansprüche,
**dadurch gekennzeichnet, dass**
die Dämpfungsringe (32) aus Kunststoff und/oder Gummi gefertigt sind.

6. Antriebsanordnung nach einem der vorangegangenen Ansprüche,
**dadurch gekennzeichnet, dass**
die Drehmomentstütze (24) als L-förmig gebogenes Stahlteil ausgeführt ist,
wobei ein erster Schenkel des L sich parallel zur Drehachse der Welle (31) erstreckt und der andere Schenkel sich senkrecht zur Drehachse der Welle (31) erstreckt.

7. Antriebsanordnung nach einem der vorangegangenen Ansprüche,
**dadurch gekennzeichnet, dass**
jeder Dämpfungsring (32) mehrstückig ausgeführt ist.

8. Antriebsanordnung nach einem der vorangegangenen Ansprüche,
**dadurch gekennzeichnet, dass**
jeder Dämpfungsring (32) als Stapel von Ringen ausgeführt ist, die jeweils aus unterschiedlichem Material gefertigt sind.

9. Antriebsanordnung nach einem der vorangegangenen Ansprüche,
**dadurch gekennzeichnet, dass**
die Welle (31) teilweise in die Hohlwelle (22) eingesteckt ist und drehfest verbunden ist, insbesondere mittels Passfederverbindung.

10. Antriebsanordnung nach einem der vorangegangenen Ansprüche,
**dadurch gekennzeichnet, dass**
auf der Seiltrommel (30) Seile (4) aufwickelbar sind,
wobei ein jeweiliges Seil (4) mit einem jeweiligen Korbteil (6) eines Greifkorbs verbunden ist.

11. Antriebsanordnung nach einem der vorangegangenen Ansprüche,
**dadurch gekennzeichnet, dass**
die Korbteile (6) um eine gemeinsame Drehachse drehbar gelagert angeordnet sind,
wobei jedes Korbteil (6) über ein jeweiliges Drehlager mit einer Stange (5) verbunden ist, die mit dem Haltemittel (23) verbunden ist, insbesondere spielbehaftet verbunden ist.

12. Antriebsanordnung nach einem der vorangegangenen Ansprüche,
**dadurch gekennzeichnet, dass**
am Haltemittel (23) eine Dämpfungsrolle (33) befestigt ist, an welcher der Elektromotor (20), insbesondere mit seinem Gehäuse, anliegt.

13. Antriebsanordnung nach einem der vorangegangenen Ansprüche, **dadurch gekennzeichnet, dass** auf der Seiltrommel (30) Seile (4) aufwickelbar sind,
wobei ein jeweiliges Seil (4) mit einem jeweiligen Korbteil (6) eines Greifkorbs verbunden ist,
wobei die Korbteile (6) um eine gemeinsame Drehachse drehbar gelagert angeordnet sind,
wobei jedes Korbteil (6) über ein jeweiliges Drehlager mit einer Stange (5) verbunden ist, die mit dem Haltemittel (23) verbunden ist, insbesondere spielbehaftet verbunden ist.

## Claims

1. Drive assembly, comprising a shaft (31), a cable drum (30), a holding means (23) and a gear motor,
wherein the gear motor has a gearbox (21) which is driven by an electric motor (20) of the gear motor and the output shaft (31) of which is designed as a hollow shaft (22),
wherein bearings are accommodated in a housing part of the gearbox (21) in order to rotatably support the output shaft,
wherein the shaft (31) is mounted in a rotatable manner, in particular relative to the holding means (23), by means of bearings accommodated in the holding means (23),
wherein the cable drum (30) is connected to the shaft (31) in such a way as to rotate therewith,
wherein a torque support (24), in particular a torque support part, is connected to the holding means (23), in particular by means of screws (25),
**characterized in that** at least one screw passing through a cutout of the torque support (24) is screwed
- into a threaded bore in the housing part of the gearbox (21), or
- into a threaded bore in a part bearing against the housing part of the gearbox (21), in particular a part form-fittingly connected to the housing part in the direction of the axis of rotation of the shaft (31),
wherein the screw, with its screw head, presses a first damping ring (32) onto the torque support (24), and thus the torque support (24) presses a second damping ring (32) toward the housing part of the gearbox (21).

2. Drive assembly according to claim 1,
**characterized in that**
the gearbox (21) is designed as a parallel shaft gearbox, and the rotor shaft of the electric motor (20) is oriented parallel to the shaft (31).

3. Drive assembly according to any one of the preceding claims,
**characterized in that**
the clear internal diameter of the cutout is larger than the maximum external diameter of the region of the screw that covers the same area in the axial direction as the cutout also covers in the axial direction.

4. Drive assembly according to any one of the preceding claims,
**characterized in that**
the damping rings (32) are made of a material that has a higher elasticity than the material from which the torque support (24) is made and/or from which the housing part is made.

5. Drive assembly according to any one of the preceding claims,
**characterized in that**
the damping rings (32) are made of plastic and/or rubber.

6. Drive assembly according to any one of the preceding claims,
**characterized in that**
the torque support (24) is designed as an L-shaped bent steel part,
wherein a first leg of the L extends parallel to the axis of rotation of the shaft (31) and the other leg extends perpendicular to the axis of rotation of the shaft (31).

7. Drive assembly according to any one of the preceding claims,
**characterized in that**
each damping ring (32) is formed of multiple parts.

8. Drive assembly according to any one of the preceding claims,
**characterized in that**
each damping ring (32) is formed as a stack of rings, which are each made of a different material.

9. Drive assembly according to any one of the preceding claims,
**characterized in that**
the shaft (31) is partially inserted into the hollow shaft (22) and is connected thereto in such a way as to rotate therewith, in particular by means of a keyed connection.

10. Drive assembly according to any one of the preceding claims,
**characterized in that**
cables (4) can be wound onto the cable drum (30),
wherein a respective cable (4) is connected to a respective bucket part (6) of a grab bucket.

11. Drive assembly according to any one of the preceding claims,
**characterized in that**
the bucket parts (6) are mounted in such a way as to be rotatable about a common axis of rotation,
wherein each bucket part (6) is connected via a respective swivel bearing to a rod (5), which is connected, in particular connected with play, to the holding means (23).

12. Drive assembly according to any one of the preceding claims,
**characterized in that**
a damping roller (33) is attached to the holding means (23), against which damping roller the electric motor (20) bears, in particular with its housing.

13. Drive assembly according to any one of the preceding claims,
**characterized in that**
cables (4) can be wound onto the cable drum (30),
wherein a respective cable (4) is connected to a respective bucket part (6) of a grab bucket,
wherein the bucket parts (6) are mounted in such a way as to be rotatable about a common axis of rotation,
wherein each bucket part (6) is connected via a respective swivel bearing to a rod (5), which is connected, in particular connected with play, to the holding means (23).

## Revendications

1. Ensemble d'entraînement comprenant un arbre (31), un tambour à câble (30), un moyen de retenue (23) et un motoréducteur,
le motoréducteur présentant une transmission (21) entraînée par un moteur électrique (20) du motoréducteur et dont l'arbre de sortie, en particulier l'arbre entraîné (31), est réalisé sous la forme d'un arbre creux (22),
des paliers étant logés dans une partie carter de la transmission (21) en vue de la mise sur palier rotatif de l'arbre de sortie,
l'arbre (31) étant monté rotatif, en particulier par rapport au moyen de retenue (23), grâce à des paliers logés dans le moyen de retenue (23),
le tambour à câble (30) étant relié de manière solidaire en rotation à l'arbre (31),
un support de couple (24), en particulier une pièce de support de couple, étant relié au moyen de retenue (23), en particulier au moyen de vis (25),
**caractérisé en ce que**
au moins une vis traversant un évidement du support de couple (24) est vissée
- dans un alésage fileté de la partie carter de la transmission (21) ou
- dans un alésage fileté d'une partie adjacente à la partie carter de la transmission (21), en particulier d'une partie reliée à la partie carter avec verrouillage par complémentarité de forme en direction de l'axe de rotation de l'arbre (31),
la vis pressant avec sa tête de vis une première bague d'amortissement (32) contre le support de couple (24) et le support de couple (24) pressant ainsi une deuxième bague d'amortissement (32) vers la partie carter de la transmission (21).

2. Ensemble d'entraînement selon la revendication 1,
**caractérisé en ce que**
la transmission (21) est réalisée sous la forme d'une transmission à arbres parallèles et l'arbre de rotor du moteur électrique (20) est orienté parallèlement à l'arbre (31).

3. Ensemble d'entraînement selon l'une quelconque des revendications précédentes,
**caractérisé en ce que**
le diamètre intérieur libre de l'évidement est supérieur au diamètre extérieur maximal de la région de la vis qui recouvre dans la direction axiale la même région que celle que l'évidement recouvre dans la direction axiale.

4. Ensemble d'entraînement selon l'une quelconque des revendications précédentes,
**caractérisé en ce que**
les bagues d'amortissement (32) sont fabriquées dans un matériau qui présente une élasticité supérieure à celle du matériau à partir duquel le support de couple (24) est fabriqué et/ou à partir duquel la partie carter est fabriquée.

5. Ensemble d'entraînement selon l'une quelconque des revendications précédentes,
**caractérisé en ce que**
les bagues d'amortissement (32) sont fabriquées en plastique et/ou en caoutchouc.

6. Ensemble d'entraînement selon l'une quelconque des revendications précédentes,
**caractérisé en ce que**
le support de couple (24) est réalisé sous la forme d'une pièce en acier pliée en forme de L,
une première branche du L s'étendant parallèlement à l'axe de rotation de l'arbre (31) et l'autre branche s'étendant perpendiculairement à l'axe de rotation de l'arbre (31).

7. Ensemble d'entraînement selon l'une quelconque des revendications précédentes,
**caractérisé en ce que**
chaque bague d'amortissement (32) est réalisée en plusieurs pièces.

8. Ensemble d'entraînement selon l'une quelconque des revendications précédentes,
**caractérisé en ce que**
chaque bague d'amortissement (32) est réalisée sous la forme d'un empilement d'anneaux fabriqués respectivement dans un matériau différent.

9. Ensemble d'entraînement selon l'une quelconque des revendications précédentes,
**caractérisé en ce que**
l'arbre (31) est partiellement inséré dans l'arbre creux (22) et est relié à celui-ci de manière solidaire en rotation, en particulier au moyen d'une liaison à clavette.

10. Ensemble d'entraînement selon l'une quelconque des revendications précédentes,
**caractérisé en ce que**
des câbles (4) peuvent être enroulés sur le tambour à câble (30),
un câble (4) respectif étant relié à une pièce de panier (6) respective d'un panier de préhension.

11. Ensemble d'entraînement selon l'une quelconque des revendications précédentes,
**caractérisé en ce que**
les pièces de panier (6) sont montées rotatives sur palier autour d'un axe de rotation commun,
chaque pièce de panier (6) étant reliée par un palier rotatif respectif, en particulier avec un jeu, à une tige (5) qui est reliée au moyen de retenue (23).

12. Ensemble d'entraînement selon l'une quelconque des revendications précédentes,
**caractérisé en ce que**
un rouleau d'amortissement (33), contre lequel repose le moteur électrique (20), en particulier l'enveloppe de celui-ci, est fixé au moyen de retenue (23).

13. Ensemble d'entraînement selon l'une quelconque des revendications précédentes,
**caractérisé en ce que**
des câbles (4) peuvent être enroulés sur le tambour à câble (30),
un câble (4) respectif étant relié à une pièce de panier (6) respective d'un panier de préhension,
les pièces de panier (6) étant montées rotatives sur palier autour d'un axe de rotation commun,
chaque pièce de panier (6) étant reliée par un palier rotatif respectif, en particulier avec un jeu, à une tige (5) qui est reliée au moyen de retenue (23).
